# EUROPÄISCHE PATENTANMELDUNG

(11) **EP 1 750 019 A1**
(43) Veröffentlichungstag der Anmeldung: **07.02.2007**
(21) Anmeldenummer: 06014926.7
(22) Anmeldetag: 18.07.2006
(51) Int. Cl.: F16B 5/00, E04B 1/61, E06B 3/70

(54) **Vorrichtung zum Verbinden von zwei Wand- oder Tür- oder Torpaneelen mit mindestens einem länglichen Verbindungselement**

(30) Priorität: 05.08.2005 DE 102005036969
(71) Anmelder: Novoferm Riexinger Türenwerke GmbH, 74336 Brackenheim-Hausen (DE)
(72) Erfinder: Wolschinski, Sascha, 75031 Eppingen (DE)
(74) Vertreter: Thun, Clemens

(57) **Zusammenfassung**

Die Erfindung betrifft eine Verbindungsanordnung (1) zum Verbinden von zwei wenigstens Wand- oder Tür- oder Torpaneelen (2), die mit zwei einander zugewandten Schmalseiten (2a, 2b) aneinander setzbar sind, mit mindestens einem länglichen Verbindungselement (7A, 8A), das zwei Verbindungsteile (7a, 7b) der Paneele (2) mit einander verbindet. Um eine Beeinträchtigung der sichtbaren Breitseite der Paneele zu vermeiden, ist das Verbindungselement (7A, 8A) im wesentlichen parallel zu den Paneelen angeordnet und von einer Schmalseite her zugänglich.

## Beschreibung

Die Erfindung betrifft eine Vorrichtung zum Verbinden von zwei Wand- oder Tür- oder Torpaneelen gemäß dem Oberbegriff des Anspruchs 1.

Eine solche Vorrichtung ist offenkundig vorbenutzt worden und deshalb Stand der Technik. Bei dieser vorbekannten Vorrichtung liegen zwei Torpaneelen eines Schiebetores mit ihren aufrechten Schmalseiten aneinander an, wobei diese beiden Schmalseiten im Sinne einer Nut-/Federverbindung ausgebildet sind und durch mehrere übereinander angeordnete längliche Verbindungselemente in Form von Schrauben miteinander verschraubt sind, die die eine Längsnut in dem einen Paneel begrenzenden Verbindungsschenkel und einen an dem anderen Paneel angeordneten mittleren Verbindungssteg quer zu den Paneelen durchfassen, nämlich eingeschraubt sind.

Diese vorbekannte Verbindungsvorrichtung ist aus mehreren Gründen nachteilig. Zum einen sind die Verschraubungen zumindest auf der Seite der Paneele, auf der sich die Schraubenköpfe befinden, von außen sichtbar. Hierdurch wird nicht nur die Sichtfläche beeinträchtigt, sondern es können sich auch in Spalten, Ecken oder Vertiefungen Schmutz ansammeln, was unerwünscht ist. Außerdem sind die Verschraubungen wärmetechnisch nachteilig, weil sie eine vorhandene Wärmedämmung durchbrechen und als Wärmeleiter fungieren, was ebenfalls unerwünscht ist. Ein weiterer Nachteil besteht darin, dass diese bekannte Verbindungsvorrichtung vielgliedrig und aufwendig ist und somit teuer in der Herstellung und Montage ist.

Der Erfindung liegt die Aufgabe zugrunde, eine Vorrichtung der vorliegenden Art so auszugestalten, dass die breitseitige Sichtfläche der Paneele nicht beeinträchtigt wird.

Diese Aufgabe wird durch die Merkmale des Anspruchs 1 gelöst. Vorteilhafte Weiterbildungen der Erfindung sind in den Unteransprüchen beschrieben.

Der Erfindung liegt die Erkenntnis zugrunde, dass sich eine oder beide Schmalseiten für eine Zugänglichkeit für wenigstens ein Verbindungselement der Vorrichtung eignen, und zwar sowohl für die Herstellung der das Verbindungselement aufnehmenden Vorrichtungselemente als auch für die Montage bzw. Demontage des Verbindungselements.

Bei der erfindungsgemäßen Ausgestaltung erstreckt sich das wenigstens eine längliche Verbindungselement im wesentlichen parallel zu den Paneelen, wobei es im Bereich der Dicke der Paneele so angeordnet ist, dass es von einer der beiden Schmalseiten her zugänglich ist, die sich quer zu den Schmalseiten erstreckt, an denen die Paneele aneinander gesetzt sind. Diese Ausgestaltung ermöglicht es, sowohl die das Verbindungselement aufnehmenden Vorrichtungselemente von der freien Schmalseite her herzustellen als auch das Verbindungselement von dieser Schmalseite her zu montieren bzw. zu demontieren. Bei einer solchen Ausgestaltung bleibt die sichtbare Breitseite der Paneele unbeeinträchtigt, und auch die Wärmedämmung wird nicht beeinträchtigt, weil das Verbindungselement sich im wesentlichen parallel zur Mittelebene der Paneele erstreckt.

Der Erfindung liegt im weiteren die Erkenntnis zugrunde, dass insbesondere dann, wenn die Paneele im Bereich ihrer aneinander gesetzten Schmalseiten im Sinne einer Nut-/Federverbindung ausgebildet sind und ineinander greifen, es ausreicht, wenn die Verbindungsanordnung zwei Verbindungsvorrichtungen aufweist, die im Endbereich der aneinander gesetzten Schmalseiten angeordnet sind. Bei dieser Ausgestaltung befinden sich die Verbindungsvorrichtungen nahe bzw. direkt an der freien Schmalseite. Hierdurch lässt sich nicht nur eine einfache und kleine Konstruktion verwirklichen, sondern es ist auch eine einfache Montage bzw. Demontage gewährleistet.

Eine Montage bzw. Demontage lässt sich dann besonders einfach handhabungsfreundlich und schnell realisieren, wenn die Verbindungsvorrichtungen im Sinne von Steckverbindungen und/oder Riegelvorrichtungen ausgebildet sind.

Es ist von besonderem Vorteil, die im oberen Verbindungsbereich angeordnete Verbindungsvorrichtung durch eine Steckverbindung und die im unteren Bereich der Paneele angeordnete Verbindungsvorrichtung durch eine Riegelvorrichtung zu bilden. Diese beiden Verbindungsvorrichtungen sind natürlich auch dann funktionsfähig, wenn sie um 180° verdreht angeordnet werden.

Es ist zur Stabilisierung der Paneele vorteilhaft, die Verbindungsteile der Verbindungsvorrichtung jeweils durch an den Paneelen befestigten Beschlagteilen auszubilden. Hierdurch lassen sich nicht nur stabile Beschlagteile integrieren, sondern es lassen sich auch stabile Befestigungen für die Beschlagteile an den Paneelen verwirklichen. Dabei ist es besonders vorteilhaft, die Beschlagteile an einem Teil oder an der gesamten Länge der Schmalseiten der Paneele anzuordnen, so dass sie auch zur Stabilisierung der Paneele beitragen.

In weiteren Unteransprüchen sind Merkmale enthalten, die eine weitere Stabilisierung ermöglichen und eine kleine und funktionsfähige Konstruktion gewährleisten, die die Montage bzw. Demontage weiter verbessern und bei Gewährleistung von beidseitig nicht vorstehenden Bauteilen eine kleine Konstruktion gewährleisten.

Nachfolgend werden vorteilhafte Ausgestaltungen der Erfindung anhand von mehreren Ausführungsbeispielen und Zeichnungen näher erläutert. Es zeigt:
- Fig. 1: zwei Wand- oder Tür- oder Torpaneele in der Seitenansicht, die durch eine erfindungsgemäße Verbindungsanordnung an ihren einander zugewandten aufrechten Schmalseiten miteinander verbunden sind;
- Fig. 2: die Paneele und die Vorrichtung in einer Montagezwischenstellung;
- Fig. 3: den horizontalen Teilschnitt III-III in Fig. 1;
- Fig. 4: den in Fig. 1 mit X gekennzeichneten Stoßbereich der Paneele im vertikalen Längsschnitt und in vergrößerter Darstellung;
- Fig. 5: den Stoßbereich der Paneele in der Draufsicht;
- Fig. 6: den Teilschnitt VI-VI in Fig. 4;
- Fig. 7: den Teilschnitt VII-VII in Fig. 4.

Die in ihrer Gesamtheit mit 1 bezeichnete Verbindungsanordnung dient dazu, zwei Paneele 2, die im Bereich ihrer aufrechten Schmalseiten aneinander gesetzt sind, miteinander zu verbinden. An diesen Schmalseiten 2a, 2b greifen die Paneele 2 formschlüssig ineinander, wobei die von den Breitseiten her sichtbare Teilungsfuge 3 formschlüssig geschlossen ist. Beim vorliegenden Ausführungsbeispiel weisen hierfür die Paneele 2 an ihrer einen Schmalseite 2b eine längs der Schmalseite 2b bzw. aufrecht verlaufende und mittig angeordnete Verbindungsnut 4 auf, in die ein ebenfalls aufrecht und mittig angeordneter Verbindungssteg 5 an der Schmalseite 2a des anderen Paneels 2 eingesteckt ist. Durch diesen Eingriff wird nicht nur die mechanische Verbindung an den aneinander gesetzten Schmalseiten 2a, 2b stabilisiert, sondern es werden auch die Wärmedämmung und die Schalldämmung verbessert, weil eine quer direkt durchgehende Teilungsfuge 3 vermieden ist. Die Verbindungsnut 4 ist durch zwei Paneelschenkel 6 seitlich begrenzt, die in die Ausnehmungen auf beiden Seiten des Paneelstegs 5 einfassen und diese ausfüllen, so dass die Breitseiten der aneinander gesetzten Paneele 2 miteinander fluchten.

Der Verbindungssteg 5 kann durch eine sich etwa in der Mittelebene des Paneels 2 befindliche Wärmeisolierung 10 wärmeisoliert sein. Hierbei kann es sich um eine Schicht oder einen Streifen handeln, die bzw. der mit den beiden seitlichen Verbindungsstegabschnitt ein Verbundteil bildet oder zwischen zwei Verbindungsstegabschnitten angeordnet ist.

Die Verbindungsanordnung 1 ist durch zwei Verbindungsvorrichtungen 7, 8 gebildet, die im oberen und unteren Eckenbereich der Paneele 2 angeordnet sind. Dabei können die Verbindungsvorrichtungen 7, 8 gleich bzw. prinzipiell gleich oder bezüglich einer horizontalen Mittelebene spiegelbildlich angeordnet sein. Beim vorliegenden Ausführungsbeispiel sind die Verbindungsvorrichtungen 7, 8 zwei unterschiedliche Verbindungsvorrichtungen, wobei die eine Verbindungsvorrichtung 7, die z. B. im Bereich der oberen Paneelecken angeordnet ist, durch eine Steckverbindung gebildet ist und die z. B. im Bereich der unteren Ecken angeordnete Verbindungsvorrichtung 8 durch eine Verriegelungsvorrichtung gebildet ist. Die Anordnung der Verbindungsvorrichtungen 7, 8 im oberen und unteren Eckenbereich hat den Vorteil, dass jeweils das zugehörige und parallel zur Paneelenebene angeordnete Verbindungselement 7A, 8A, nämlich bei der oberen Verbindungsvorrichtung 7 ein Steckzapfen und bei der unteren Verbindungsvorrichtung 8 ein Riegel, von der zugehörigen Schmalseite 9, 11 her zugänglich ist, die sich rechtwinklig zu den Schmalseiten 2a, 2b erstrecken, an denen die Paneele 2 aneinander gesetzt sind. Bei der vorliegenden Anordnung, bei der die aneinander gesetzten Schmalseiten 2a, 2b sich vertikal erstrecken, erstrecken sich die mit 9 und 11 bezeichneten oberen und unteren freien Schmalseiten horizontal. Im Rahmen der Erfindung kann die Verbindungsanordnung 1 in der Ebene der Paneele 2 um 90° gedreht sein, so dass die aneinander gesetzten Schmalseiten sich horizontal erstrecken.

Die durch eine Steckverbindung gebildete Verbindungsvorrichtung 7 weist zwei Verbindungstragteile 7a, 7b und zwei daran ausgebildete Steckverbindungsteile auf, die durch ein in dem einen Verbindungstragteil 7b ausgebildetes Steckloch 7c und einen vom anderen Verbindungstragteil abstehenden Steckzapfen 7d gebildet sind. Die Verbindungstragteile 7a, 7b überlappen einander in der Längsrichtung 3a der aneinander liegenden Schmalseiten 2a, 2b. Beim Ausführungsbeispiel durchfasst der Steckzapfen 7d auch das Verbindungstragteil 7a in einem Loch 7e, wobei er mit einem Zapfenkopf darauf aufliegen kann und fest verbunden sein kann, z. B. durch Schweißen.

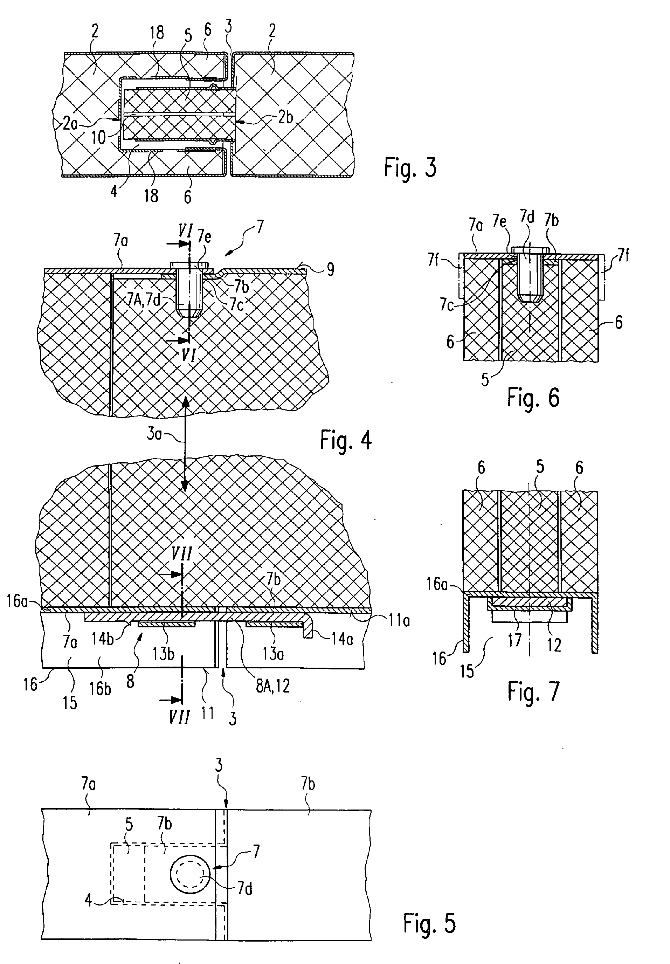

Das den Steckzapfen 7d tragende Verbindungstragteil 7a erstreckt sich quer zum freien Querschnitt der Verbindungsnut 4, wobei es vorzugsweise am zugehörigen Rand der freien Schmalseite 9 angeordnet ist und z. B. durch ein Beschlagteil der freien Schmalseiten 9 gebildet ist, dass sich über die gesamte Schmalseite 9 erstrecken kann. Dabei befindet sich der Steckzapfen 7d vorzugsweise im mittleren Querschnittsbereich der Verbindungsnut 4, wie es Fig. 6 zeigt, wobei der Steckzapfen 7d sich vom Verbindungstragteil 7a zur gegenüberliegenden Schmalseite 11 hin erstreckt, bei der vorliegenden Ausgestaltung nach unten. Das Steckloch 7c befindet sich im Verbindungssteg 5, wobei es zur zugehörigen freien Schmalseite 9 hin ausmündet. Das vorzugsweise ebenfalls durch ein Beschlagteil gebildete Verbindungstragteil 7b überlappt somit den Verbindungssteg 5, der das Verbindungstragteil 7b bilden kann. Zur Stabilisierung des Steckloches 7c ist das durch das Verbindungstragteil 7b gebildete Beschlagteil vorgesehen, dass den Verbindungssteg 5 überdeckt und sich vorzugsweise wenigstens über einen Teil oder über die gesamte Länge der Schmalseite 9 des zugehörigen Paneels 2 erstreckt. Die Verbindungstragteile 7a, 7b sind vorzugsweise durch Blechstreifen gebildet, die die Schmalseiten 9 stabilisieren. Um dabei eine Flucht der Schmalseiten 9 zu erhalten, ist das übergriffene Verbindungstragteil 7b unter das übergreifende Verbindungstragteil 7a nach unten versetzt, z. B. abgekröpft. Entsprechend ist der Verbindungssteg 5 von der zugehörigen Schmalseite 9 beabstandet bzw. verkürzt.

Bei dem nach unten versetzten Abschnitt, der in der Draufsicht gemäß Fig. 5 z.B. auf die Breite des Stegs 5 bzw. der Nut 4 verjüngt sein kann, kann es sich um ein zusätzliches Bauteil handeln, das mit dem übrigen Verbindungstragteil 7b verbunden ist, z.B. durch Schweißen. Der nach unten versetzte Abschnitt kann das übrige Verbindungstragteil 7b z.B. untergreifen.

Zur weiteren Stabilisierung kann das Verbindungstragteil 7a und/oder 7b, das sich z.B. über die gesamte Länge der Schmalseite 9 erstreckt, im Querschnitt U-förmig ausgebildet sein. Die Schenkel 7f der U-Form stehen vorzugsweise nach unten ab, wobei sie in diesem Fall das Paneel seitlich im wesentlichen anliegend übergreifen, wie es Fig. 6 andeutungsweise zeigt.

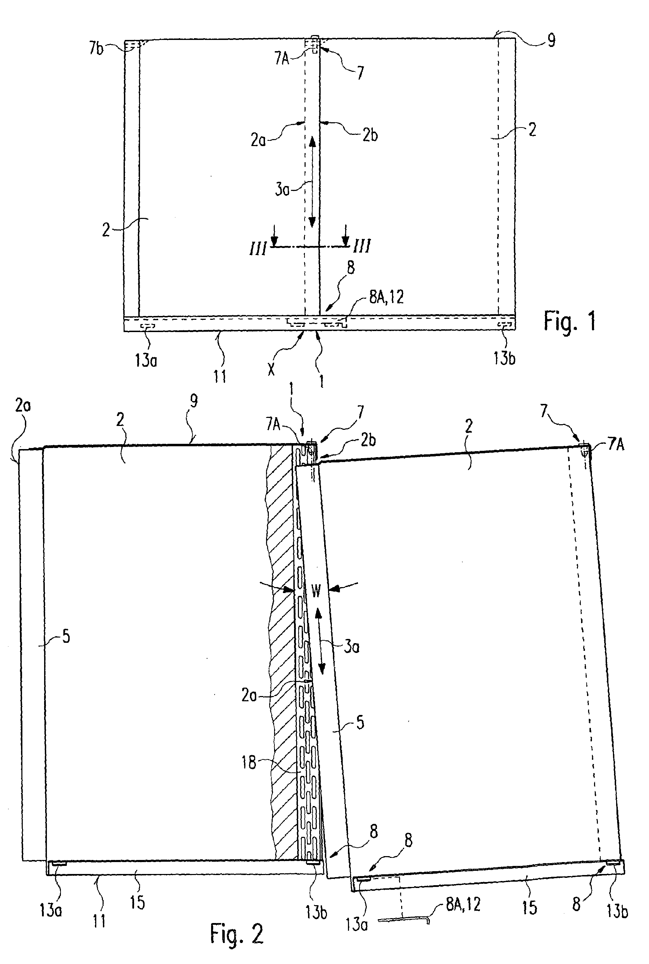

Die eine Steckverbindung bildende Verbindungsvorrichtung 7 lässt sich durch eine Relativ-Verschiebung der Paneele 2 in der Längsrichtung 3a der aneinander gesetzten Schmalseiten 2a, 2b schließen (Fig. 2), wobei der Steckzapfen 7d und das Steckloch 7c ineinander greifen. Hierzu werden die Paneele 2 in eine in der Längsrichtung 3a zueinander versetzte Stellung gebracht, wobei ihre Schmalseiten 2a, 2b aneinander gesetzt sein können oder den aus Fig. 2 entnehmbaren spitzen Winkel W aufweisen können. Durch ein Zusammenschieben in der Längsrichtung 3a werden dann das Steckloch 7c und der Steckzapfen 7d zusammengesteckt, wodurch die Verbindung in der Horizontalrichtung der Längsrichtung 3a geschlossen wird.

Um die Paneele 2 auch in der Längsrichtung 3a der aneinander gesetzten Schmalseiten 2a, 2b formschlüssig zu sichern, ist die andere Verbindungsvorrichtung 8 an den gegenüberliegenden freien Schmalseiten 11 vorgesehen. Diese Verbindungsvorrichtung 8 weist einen Riegel 12 auf, der sich quer zur Längsrichtung 3a der aneinander gesetzten Schmalseiten 2a, 2b und dabei in der Ebene der Paneele 2 erstreckt und von der freien Schmalseite 11 her zugänglich ist. Zur Verbindung des Riegels 12 mit den Paneelen 2 sind in deren Eckenbereichen zwei Riegellöcher 13a, 13b angeordnet, wobei vorzugsweise der Riegel 12 mit in seinen Endbereichen angeordneten Riegelansätzen 14a, 14b die einander abgewandten Ränder der Riegellöcher 13a, 13b hintergreift. Beim Ausführungsbeispiel sind die Riegelansätze 14a, 14b an einem Ende des Riegels 12 durch einen Riegelkopf oder Riegelschenkel gebildet, und der gegenüberliegende Riegelansatz 14b ist durch eine Rastnase gebildet, die durch die Riegellöcher 13a, 13b treibbar ist und den zugehörigen Rand des Riegelloches 13b hintergreift.

Die soweit beschriebene Riegelverbindung kann flach ausgebildet sein, so dass sie an den zugehörigen Schmalseiten 11 der Paneele 2 kaum stört. Vorzugsweise ist die die Riegelvorrichtung bildende Verbindungsvorrichtung 8 in jeweils einer Randnut 15 angeordnet, die sich in der Längsrichtung der freien Schmalseiten 11 der Paneele 2 erstrecken und beim Ausführungsbeispiel jeweils durch ein im Querschnitt U-förmiges Beschlagteil in Form einer U-Schiene 16 gebildet ist, die sich vorzugsweise über die gesamte Länge der Schmalseite 11 erstreckt und mit ihrem Schienensteg 16a an der jeweils um das Maß ihrer Schienenschenkel 16b gekürzten Schmalseiten 11a der Körper der Paneele 2 anliegt und in nicht dargestellter Weise befestigt ist, z. B. durch Kleben. Die Riegellöcher 13a, 13b sind z. B. durch U-förmige Anbauteile oder Anbauschienen 17 gebildet, die mit ihren Stegen an den Außenseiten der Schienenstege 16a befestigt sind, z. B. durch Schweißen, und die einen Querschnitt begrenzen, der unter Berücksichtigung eines Bewegungsspiels dem der Querschnittsgröße des vorzugsweise viereckigen und flachen oder runden Riegels 12 entspricht. Bei dieser Alternative bilden die Schienenstege 16a die Verbindungsteile 7a, 7b.

Durch ein Einschieben des Riegels 12 in die Riegellöcher 13a, 13b lässt sich somit die durch eine Steckverbindung gebildete Verbindungsvorrichtung 8 in der Steck-bzw. Längsrichtung 30 und in allen horizontalen Richtungen verriegeln.

Wie Fig. 2 und 3 erkennen lassen, können der Verbindungssteg 5 und/oder die Verbindungsnut 4 mit einem Blechprofil 18 verkleidet bzw. ausgekleidet sein, das versetzte Langlöcher zwecks Wärmedämmung aufweist.

Die Einzelteile der Verbindungsvorrichtungen 7, 8 sowie die Beschläge und die Schiene 16 bestehen vorzugsweise aus Metall.

Für einen Montagevorgang können die Paneele 2 mit ihren Schmalseiten 2a, 2b in deren Längsrichtung 3a versetzt zueinander parallel aneinandergesetzt oder zunächst spitzwinklig (Fig. 2) aneinander gesetzt und dann parallel geschwenkt und in der Längsrichtung 3a der Schmalseiten 2a, 2b in die Schließstellung der durch den Steckzapfen 7d und das Steckloch 7c gebildeten Steckverbindung geschoben werden. Dann wird der Riegel 12 montiert, wodurch die Paneele 2 allseitig formschlüssig aneinander fixiert werden.

Die erfindungsgemäße Verbindungsanordnung dient dazu, zwei Paneele 2 an ihren einander zugewandten Schmalseiten zu verbinden. Im Rahmen der Erfindung können auch drei oder mehrere Paneele 2 durch mehrere erfindungsgemäße Verbindungsanordnungen zu einer Wand, einer Tür oder einem Tor verbunden sein, wobei jeweils eine Verbindungsanordnung zwei einander benachbarte Paneele 2 an ihren einander zugewandten Schmalseiten verbindet.

## Patentansprüche

1. Verbindungsanordnung (1) zum Verbinden von zwei Wand- oder Tür- oder Torpaneelen (2), die mit zwei einander zugewandten Schmalseiten (2a, 2b) aneinander setzbar sind, mit mindestens einem länglichen Verbindungselement (7A, 8A), das zwei Verbindungsteile (7a, 7b) der Paneele (2) miteinander verbindet,
**dadurch gekennzeichnet,**
**dass** sich das Verbindungselement (7A, 8A) im wesentlichen parallel zu den Paneelen (2) erstreckt und von einer Schmalseite (9, 11) her zugänglich ist, die sich quer zu den aneinander gesetzten Schmalseiten (2a, 2b) erstreckt.

2. Verbindungsanordnung nach Anspruch 1,
**dadurch gekennzeichnet,**
**dass** sie zwei Verbindungsvorrichtungen (7, 8) aufweist, die im Endbereich der aneinander gesetzten Schmalseiten (2a, 2b) angeordnet sind.

3. Verbindungsanordnung nach Anspruch 2,
**dadurch gekennzeichnet,**
**dass** die eine Verbindungsvorrichtung (7) ein Verbindungselement (7A) aufweist, das sich im Bereich der aneinander gesetzten Schmalseiten (2a, 2b) in deren Längsrichtung erstreckt und zwei einander überlappende Verbindungsteile (7a, 7b) miteinander verbindet.

4. Verbindungsanordnung nach Anspruch 3,
**dadurch gekennzeichnet,**
**dass** das Verbindungselement (7A) ein Steckzapfen (7d) ist.

5. Verbindungsanordnung nach Anspruch 4,
**dadurch gekennzeichnet,**
**dass** der Steckzapfen (7d) an dem einen Verbindungsteil (7a) befestigt ist und das andere Verbindungsteil (7b) ein Steckloch (7c) für den Steckzapfen (7d) aufweist.

6. Verbindungsanordnung nach einem der vorherigen Ansprüche,
**dadurch gekennzeichnet,**
**dass** das eine Paneel (2) an seiner Schmalseite (2a) einen sich längs der Schmalseite erstreckenden Verbindungssteg (5) aufweist und das andere Paneel (2) an seiner Schmalseite (2b) eine Verbindungsnut (4) zur Aufnahme des Verbindungsstegs (5) aufweist.

7. Verbindungsanordnung nach Anspruch 6,
**dadurch gekennzeichnet,**
**dass** das eine Verbindungselement (7a) die Verbindungsnut (4) überdeckt und das andere Verbindungselement (7b) im Bereich des Verbindungsstegs (5) dessen Breite entspricht, so dass das betreffende Paneel (2) längs seiner Schmalseite (2a) versetzt in die Verbindungsnut (4) einführbar ist.

8. Verbindungsanordnung nach einem der vorherigen Ansprüche 3 bis 7,
**dadurch gekennzeichnet,**
**dass** die Verbindungsteile (7a, 7b) einander überlappen, z.B. ein Verbindungsteilabschnitt einstückig oder zweistückig nach unten versetzt ist, z.B. als separates Blechteil mit dem Steckloch (7c) mit dem übrigen Abschnitt verbunden, insbesondere verschweißt ist, oder abgekröpft ist.

9. Verbindungsanordnung nach einem der Ansprüche,
**dadurch gekennzeichnet,**
**dass** die Verbindungsteile (7a, 7b) sich wenigstens über einen Teil der zugehörigen Schmalseite (9) erstrecken, vorzugsweise über deren gesamte Länge, insbesondere als Blechstreifen.

10. Verbindungsanordnung nach einem der vorherigen Ansprüche,
**dadurch gekennzeichnet,**
**dass** die andere Verbindungsvorrichtung (8) ein Verbindungselement (8A) aufweist, das sich quer zur Längsrichtung (3a) der aneinander gesetzten Schmalseiten (2a, 2b) erstreckt.

11. Verbindungsanordnung nach Anspruch 10,
**dadurch gekennzeichnet,**
**dass** das Verbindungselement (8A) durch einen Riegel (12) gebildet ist, der in Riegellöcher (13a, 13b) an beiden Paneelen (2) einsteckbar ist.

12. Verbindungsanordnung nach Anspruch 11,
**dadurch gekennzeichnet,**
**dass** der Riegel (12) in seinen Endbereichen Riegelansätze (14a, 14b) aufweist, die der einander abgewandten Enden der Riegellöcher (13a, 13b) hintergreifen.

13. Verbindungsanordnung nach einem der vorherigen Ansprüche,
**dadurch gekennzeichnet,**
**dass** die Paneele (2) an einer ihrer sich quer zu den aneinander setzbaren Schmalseiten (2a, 2b) erstreckenden Schmalseite (11) jeweils eine Winkel- oder U-Schiene (16) aufweisen, deren Schenkel (16b) von den Paneelen (2) abstehen.

14. Verbindungsanordnung nach Anspruch 13,
**dadurch gekennzeichnet,**
**dass** die andere Verbindungsvorrichtung (8) an den den Paneelen (2) abgewandten Außenseiten der Schienenstege (16a) der Schienen (16) angeordnet ist.

15. Verbindungsanordnung nach einem der vorherigen Ansprüche 6 bis 14,
**dadurch gekennzeichnet,**
**dass** der Verbindungssteg (5) und/oder die Verbindungsnuten (4) mit einem im Querschnitt flachen, winkelförmigen oder U-förmigen Blechprofil (18) verkleidet bzw. ausgekleidet ist, dass vorzugsweise versetzte Löcher, insbesondere Langlöcher, zwecks Wärmedämmung aufweist.
